# EUROPEAN PATENT APPLICATION

(11) **EP 4 068 848 A1**
(43) Date of publication of application: **05.10.2022**
(21) Application number: 21165849.7
(22) Date of filing: 30.03.2021
(51) Int. Cl.: H04W 28/18

(54) **COMMUNICATION NETWORK ARRANGEMENT AND METHOD FOR SELECTING A NETWORK FUNCTION OF A COMMUNICATION NETWORK**

(71) Applicant: NTT DOCOMO, INC., Chiyoda-ku Tokyo 100-6150 (JP)
(72) Inventor: SAMA, Malla Reddy, 80687 Munich (DE); THAKOLSRI, Srisakul, 80687 Munich (DE)
(74) Representative: Viering, Jentschura & Partner mbB Patent- und Rechtsanwälte

(57) **Abstract**

According to one embodiment, a communication network arrangement is described comprising a first network function, a group of second network functions, a memory storing, for each of at least one second network function of the group of second network functions, information about support of a network slice quota by the second network function, wherein the first network function is configured to, in response to being requested to perform a service for which it requires one of the second network functions which supports one or more network slice related quota, consult the memory and select one of the second network functions according to the stored information and the requirements of the service and to contact the selected second network function and to perform the requested service by means of the selected second network function.

## Description

The present disclosure relates to communication network arrangements and methods for selecting a network function of a communication network.

In a communication network such as a 5G mobile radio communication network it may be desirable to introduce and implement limitations or quota with respect to the data rate in uplink and downlink, e.g. the maximum data rate used by sessions provided by the network slice for a single UE. Similarly, it may be desirable to introduce and implement limitations or quota with respect to the number of mobile terminals registered, e.g. for a certain network slice, or the number of sessions established, e.g. by means of a certain network slice. This may for example be used to prevent overload and thus to ensure a certain performance of the communication network. Corresponding approaches which allow implementation and enforcement of such quota are desirable.

According to one embodiment, a communication network arrangement is provided including a first network function, a group of second network functions, a memory storing, for each of at least one second network function of the group of second network functions, information about support of a network slice quota by the second network function, wherein the first network function is configured to, in response to being requested to perform a service for which it requires one of the second network functions which supports one or more network slice related quota, consult the memory and select one of the second network functions according to the stored information and the requirements of the service and to contact the selected second network function and to perform the requested service by means of the selected second network function. According to further embodiments, a method for selecting a network function of a communication network according to the above communication network arrangement is provided.

Various Examples are described in the following.
Example 1 is a communication network arrangement as described above.
Example 2 is the communication network arrangement of Example 1, wherein the communication network arrangement is part of a communication network which includes multiple network slices and the quota is a quota specific for a network slice and/or a mobile terminal.
Example 3 is the communication network arrangement of Example 2, wherein the network slices are core network slices or include a core network slice or a combination of both a core network slice and a radio access network slice.
Example 4 is the communication network arrangement of any one of Examples 1 to 3, wherein the network slice quota limits the total data rate over the communication sessions provided in a network slice for all mobile terminal in the network slice, wherein the network slice quota limits the total data rate over all communication sessions provided in a network slice or wherein the quota limits the number of mobile terminals registered in a network slice and/or the number of communication sessions provided in a network slice.
Example 5 is the communication network arrangement of any one of Examples 1 to 4, wherein the information is information specifies for the second network function of the group of second network functions at least one of whether the second network function Supports enforcement of a network slice quota which limits the maximum number of mobile terminals registered in a network slice;
   Supports enforcement of a network slice quota which limits the maximum number of sessions provided in a network slice;
   Supports enforcement of a network slice quota which limits the total data rate over communication sessions provided in a network slice;
   Supports notification whether or to what degree a network slice quota which limits the maximum number of mobile terminals registered in a network slice is fulfilled;
   Supports notification whether or to what degree a network slice quota which limits the maximum number of sessions provided in a network slice is fulfilled; and
   Supports notification whether or to what degree a network slice quota which limits the total data rate over communication sessions provided in a network slice is fulfilled.
Example 6 is the communication network arrangement of any one of Examples 1 to 5, wherein the memory is a network repository function or the memory is a configuration memory of the first network function.
Example 7 is the communication network arrangement of any one of Examples 1 to 6, wherein the first network function is an Access and Mobility Management Function or a Session Management Function or a Policy Control function or a Network Slice Selection Function, and the second network function is Access and Mobility Management Function, or an Session Management Function or a Policy Control Function or Network Slice Selection Function, or a network slice admission control function.
Example 8 is the communication network arrangement of any one of Examples 1 to 7, wherein the first network function is an Application Function and the second network function is a network slice admission control function.
Example 9 is the communication network arrangement of any one of Examples 1 to 8, wherein the first network function is part of a first communication network and the group of second network functions is part of a second communication network.
Example 10 is the communication network arrangement of Example 9, wherein the memory is part of the first communication network and/or second communication network.
Example 11 is the communication network arrangement of any one of Examples 1 to 9, wherein the communication network arrangement is part of a communication network which includes the group of second network functions, wherein the group of second network functions includes multiple second network functions.
Example 12 is the communication network arrangement of any one of Examples 1 to 11, wherein the multiple second network functions have the same network function type.
Example 13 is the communication network arrangement of any one of Examples 1 to 12, wherein the communication network includes multiple network slices and each second network function is associated with a respective network slice and the first network function is configured to select a second network function such that the selected second network function is associated with a network slice for which the service is requested.
Example 14 is the communication network arrangement of any one of Examples 1 to 13, wherein the service is a registration of a mobile terminal or the establishment of a communication session for the mobile terminal or a policy check of the communication session to be established whether the data rate for the new communication session can be admitted or a notification service about whether or to what degree the quota is fulfilled.
Example 15 is the communication network arrangement of any one of Examples 1 to 14, wherein the at least one second network function of the group of second network functions is configured to store the information in the memory.
Example 16 is the communication network arrangement of any one of Examples 1 to 15, including an Operation, Administration and Maintenance function, wherein the Operation, Administration and Maintenance function is configured to store the information in the memory.
Example 17 is the communication network arrangement of any one of Examples 1 to 16, wherein the memory stores an network function profile for the at least one second network function which contains the information.
Example 18 is the communication network arrangement of any one of Examples 1 to 17, wherein consulting the memory includes sending a request to a network function including the memory or performing a read access to the memory.
Example 19 is the communication network arrangement of any one of Examples 1 to 18, wherein contacting the selected network function includes requesting the selected network function to perform a task for the requested service.
Example 20 is a method for selecting a network function of a communication network including storing, for each of at least one network function of a group of network functions, information about support of a network slice quota by the network function in a memory;
   Consulting the memory in response to being requested to perform a service for which it requires one of the network functions which supports one or more network slice related quota;
   Selecting one of the network functions according to the stored information and the requirements of the service;
   Contacting the selected network function; and
   Performing the requested service by means of the selected network function.
Example 21 is the method of Example 20, wherein the communication network includes multiple network slices and the quota is a quota specific for a network slice and/or a mobile terminal.
Example 22 is the method of Example 21, wherein the network slices are core network slices or include a core network slice or a combination of both a core network slice and a radio access network slice.
Example 23 is the method of any one of Examples 20 to 22, wherein the network slice quota limits the total data rate over the communication sessions provided in a network slice for all mobile terminal in the network slice, wherein the network slice quota limits the total data rate over all communication sessions provided in a network slice or wherein the quota limits the number of mobile terminals registered in a network slice and/or the number of communication sessions provided in a network slice.
Example 24 is the method of any one of Examples 20 to 23, wherein the information is information specifies for the network function of the group of network functions at least one of whether the network function
   - Supports enforcement of a network slice quota which limits the maximum number of mobile terminals registered in a network slice;
   - Supports enforcement of a network slice quota which limits the maximum number of sessions provided in a network slice;
   - Supports enforcement of a network slice quota which limits the total data rate over communication sessions provided in a network slice;
   - Supports notification whether or to what degree a network slice quota which limits the maximum number of mobile terminals registered in a network slice is fulfilled;
   - Supports notification whether or to what degree a network slice quota which limits the maximum number of sessions provided in a network slice is fulfilled; and
   - Supports notification whether or to what degree a network slice quota which limits the total data rate over communication sessions provided in a network slice is fulfilled.
Example 25 is the method of any one of Examples 20 to 24, wherein the memory is a network repository function or the memory is a configuration memory of a further network function performing the method.
Example 26 is the method of any one of Examples 20 to 25, performed by an Access and Mobility Management Function or a Session Management Function or a Policy Control function or a Network Slice Selection Function, wherein the network function is Access and Mobility Management Function, or an Session Management Function or a Policy Control Function or Network Slice Selection Function, or a network slice admission control function.
Example 27 is the method of any one of Examples 20 to 26, performed by an Application Function, wherein the network function is a network slice admission control function.
Example 28 is the method of any one of Examples 20 to 27, performed by a further network function of part of a first communication network and wherein the group of network functions is part of a second communication network.
Example 29 is the method of Example 28, wherein the memory is part of the first communication network and/or second communication network.
Example 30 is the method of any one of Examples 20 to 28, wherein the communication network arrangement is part of a communication network which includes the group of network functions, wherein the group of network functions includes multiple network functions.
Example 31 is the method of any one of Examples 20 to 30, wherein the multiple network functions have the same network function type.
Example 32 is the method of any one of Examples 20 to 31, wherein the communication network includes multiple network slices and each network function is associated with a respective network slice and the method includes selecting a network function such that the selected network function is associated with a network slice for which the service is requested.
Example 33 is the method of any one of Examples 20 to 32, wherein the service is a registration of a mobile terminal or the establishment of a communication session for the mobile terminal or a policy check of the communication session to be established whether the data rate for the new communication session can be admitted or a notification service about whether or to what degree the quota is fulfilled.
Example 34 is the method of any one of Examples 20 to 33, wherein the at least one network function of the group of network functions stores the information in the memory.
Example 35 is the method of any one of Examples 20 to 34, wherein an Operation, Administration and Maintenance function stores the information in the memory.
Example 36 is the method of any one of Examples 20 to 35, wherein the memory stores an network function profile for the at least one network function which contains the information.
Example 37 is the method of any one of Examples 20 to 36, wherein consulting the memory includes sending a request to a network function including the memory or performing a read access to the memory.
Example 38 is the method of any one of Examples 20 to 37, wherein contacting the selected network function includes requesting the selected network function to perform a task for the requested service.

It should be noted that one or more of the features of any of the examples above may be combined with any one of the other examples.

According to further embodiments, a computer program and a computer readable medium including instructions, which, when executed by a computer, make the computer perform the method of any one of the above Examples are provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- FIG. 1: shows a radio communication system, for example configured according to 5G (Fifth Generation) as specified by 3GPP (Third Generation Partnership Project).
- FIG. 2: illustrates a communication between an AMF (Access and Mobility Management Function) and an NSACF (Network Slice Admission Control Function).
- FIG. 3: illustrates a scenario where there are multiple NSACFs per network slice in a PLMN (Public Land Mobile Network).
- FIG. 4: illustrates a scenario where multiple NSACFs are deployed across a PLMN
- FIG. 5: illustrates a registration of a network function at an NRF (Network Repository Function) by itself.
- FIG. 6: illustrates a registration of a network function at an NRF by an OAM (Operation, Administration and Maintenance).
- FIG. 7: illustrates a network function discovery or selection by a network function service consumer for NSAC support by querying an NRF
- FIG. 8: shows a communication network arrangement according to an embodiment.
- FIG. 9: shows a flow diagram illustrating a method for selecting a network function of a communication network.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

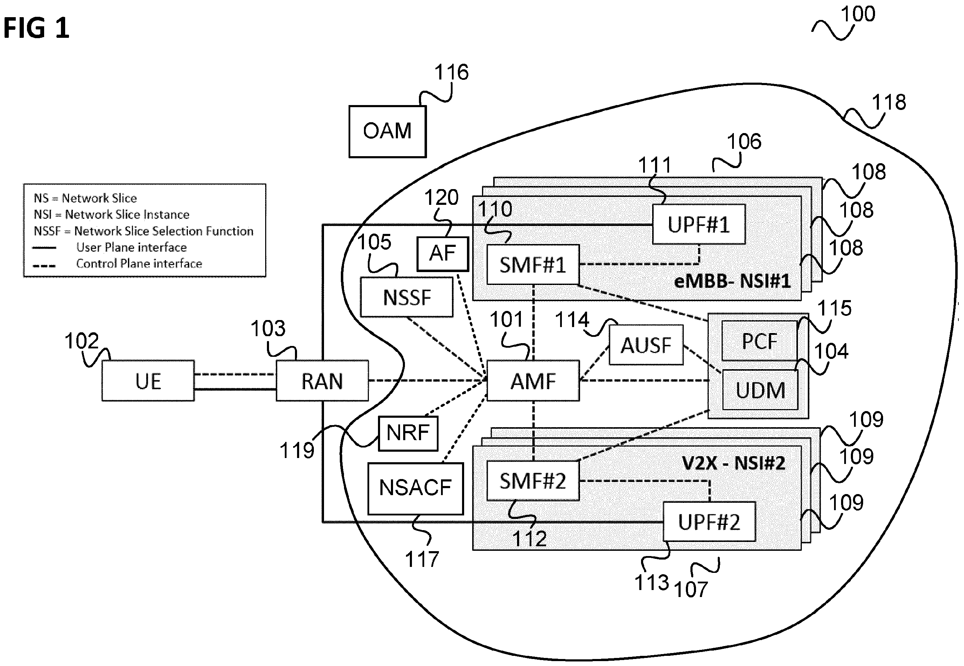

FIG. 1 shows a radio communication system 100, for example configured according to 5G (Fifth Generation) as specified by 3GPP (Third Generation Partnership Project).

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node may provide a radio communication with the mobile radio terminal device 102 over an air interface. It should be noted that the radio access network 103 may include any number of radio access network nodes.

The radio communication system 100 further includes a core network (5GC) 118 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 118 further includes an AUSF (Authentication Server Function) 114 and a PCF (Policy Control Function) 115.

The core network 118 may have multiple network slices 106, 107 and for each network slice 106, 107, the operator (also referred to MNO for Mobile Network Operator) may create multiple network slice instances (NSIs) 108, 109. For example, the core network 118 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X).

Typically, when a network slice is deployed, network functions (NFs) are instantiated, or (if already instantiated) referenced to form a network slice instance (NSI) and network functions that belong to a network slice instance are configured with a network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

An S-NSSAI (Single Network Slice Selection Assistance information) identifies a network slice and consists of:
- A Slice/Service type (SST), which refers to the expected Network Slice behaviour in terms of features and services;
- A Slice Differentiator (SD) which is optional information that complements the slice/service type(s) to differentiate amongst multiple network slices of the same slice/service type.

NSSAI may include one or more S-NSSAIs.

Allowed NSSAI is NSSAI provided by the serving PLMN (Public Land Mobile Network) during e.g. a registration procedure, indicating the S-NSSAI values allowed by the network for a UE in the serving PLMN for the current registration area.

Configured NSSAI is NSSAI that has been provisioned in the UE. It may be applicable to one or more PLMNs.

Requested NSSAI is NSSAI that the UE provides to the network during registration in order to establish a PDU session to the requested network slice.

The radio communication system 100 may further include an OAM (Operation, Administration and Maintenance) function (or entity) 116, e.g. implemented by one or more OAM servers which is connected to the RAN 103 and the core network 118 (connections are not shown for simplicity).

According to various embodiment, in a 5G radio communication system like the radio communication system 100, network slice related (network) quota are defined. This means that for example the data rate provided by a network slice 106, 107, i.e. the total data rate of all PDU sessions for a single UE being served in a network, is limited.

Alternatively or in addition, there may be a quota (or limit) which limits the total data rate over the communication sessions provided in a network slice (for all mobile terminals in the network slice together), i.e. a data rate quota per network slice 106, 107.

Other network slice related quota which may be defined in a 5G radio communication system like the radio communication system 100 provide limitation of the maximum number of UEs and/or the maximum number of PDU sessions provided by a network slice 106, 107.

The core network 118 may include a Network Slice Admission Control Function 117 (NSACF) to support enforcement of a quota, e.g. to monitor and control the number of registered UEs per network slice for the network slices 106, 107 so that, for example, it does not exceed a maximum number of UEs that is allowed to register with the network slice 106, 107. The NSACF 117 maintains a list of UEs registered for the network slice 106, 107 for reliability and accuracy on counting the number of UEs. If the maximum number of UEs has not been reached, an additional UE (requesting registration in the network slice 106, 107) is admitted to be registered for the network slice 106, 107. Otherwise, its registration is rejected. Similarly, the NSACF 117 maintains a list of PDU Sessions registered for the network slice 106, 107 for reliability and accuracy on counting the number of PDU Sessions. If the maximum number of PDU Sessions has not been reached, an additional PDU Session (requesting establishment in the network slice 106, 107) is admitted to be established for the network slice 106, 107. Otherwise, its request for establishment is rejected.

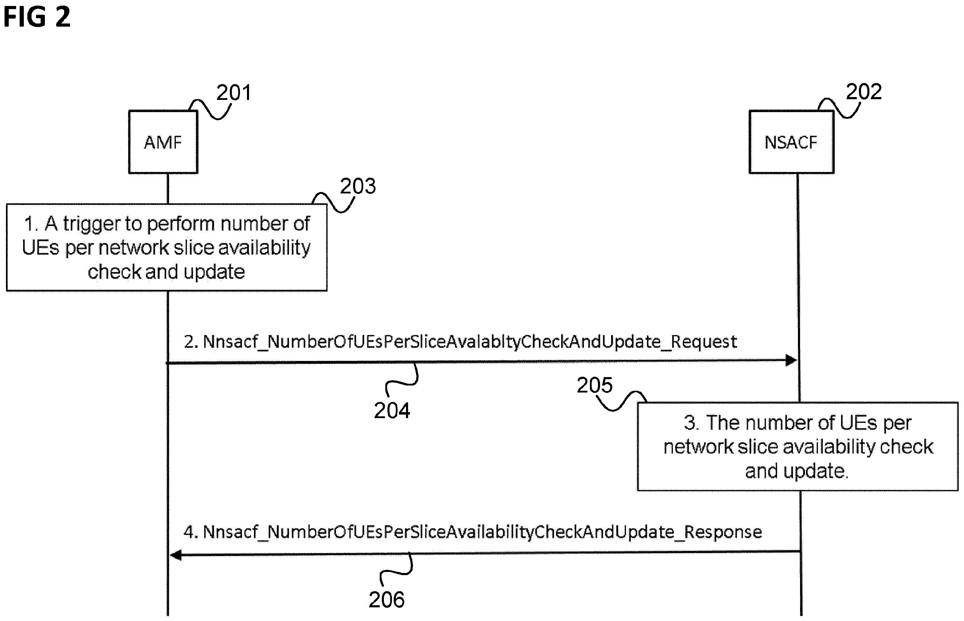

FIG. 2 illustrates a communication between an AMF 201 (e.g. corresponding to AMF 101) and an NSACF 202 (e.g. corresponding to NSACF 117).

In 203, there is a trigger in the AMF 201 to perform number of UEs per network slice availability check and update. This may for example be a registration request from a UE 102.

In 204, the AMF 201 sends a request to the NSACF 202 to check whether the UE's registration request may be accepted (or whether that would violate the quota) and to update the number of registered UEs in the NSACF (if the UE's registration request is granted).

In 205, the NSACF 202 checks whether the quota allows that the UE is registered and (if yes) updates the number of registered UEs.

In 206, it informs the AMF 201 accordingly.

It should be noted that the above may be performed per network slice, i.e. the registration is for a certain network slice and the quota is checked for that network slice (i.e. taking into account the number of UEs registered in that network slice).

Thus, if the maximum number of UEs has not been reached, the additional UE is admitted to be registered for the network slice. Otherwise, the AMF 201 rejects its registration.

The AMF 201 may have a local configuration indicating which network slice is subject to network slice admission control. The NSACF 202 for example maintains a list of UEs registered for the network slice for reliability and accuracy of the count of the number of registered UEs.

It should be noted in case of quota limitation on the PDU Sessions, AMF 201 and/or SMF 110, 112 sends a request to the NSACF 202 to check whether the PDU Session's establishment request may be accepted (or whether that would violate the quota) and to update the number of registered PDU Sessions in the NSACF (if the UE's PDU Session request is granted). Based on the NSACF 202 response, AMF 201 and/or SMF 110, 112 either accept or reject the PDU Session. In case of PDU session establishment rejection, AMF 201 and/or SMF 110, 112 may include back-off timer to the UE 102.

Multiple NSACFs may be deployed in the core network 118. In that case, a corresponding NF consumer (e.g., the AMF 201 in the above example) may utilise a network repository function (NRF) 119 to discover an NSACF instance unless NSACF information is available by other means, e.g. locally configured in the NF consumer. The NF consumer may consider the S-NSSAI for NSACF selection (i.e. select an NSACF based on network slice).

There may be multiple NSACFs for each network slice or multiple NSACFs for multiple network slices. The multiple NSACFs can be deployed as an hierarchal (e.g. as different layers) or tree (e.g. with different branch) models.

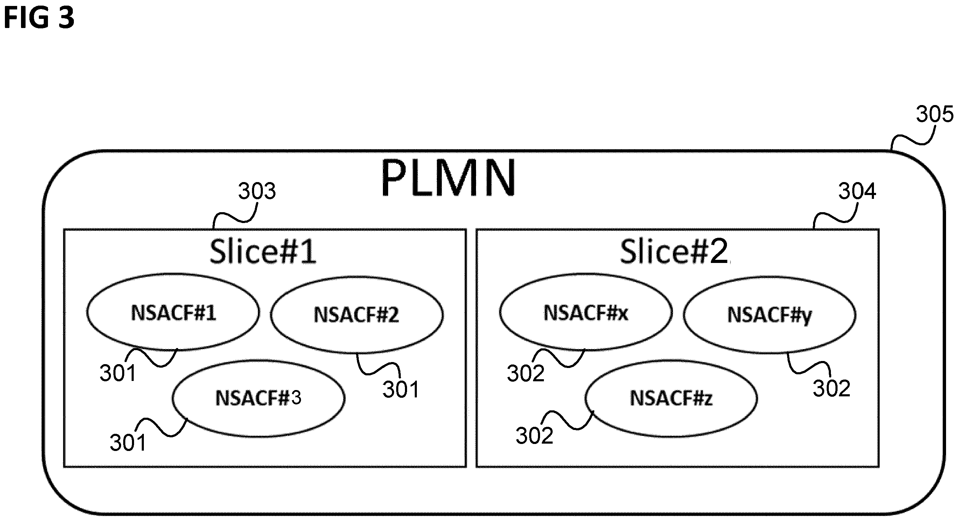

FIG. 3 illustrates a scenario where there are multiple NSACFs 301, 302 per network slice 303, 304 in a PLMN 305.

In that scenario, NSACFs of one network slice are not allowed to serve another slice. For example, the NSACFs of slice 303 only serve NFs of slice 303, but not of slice 304.

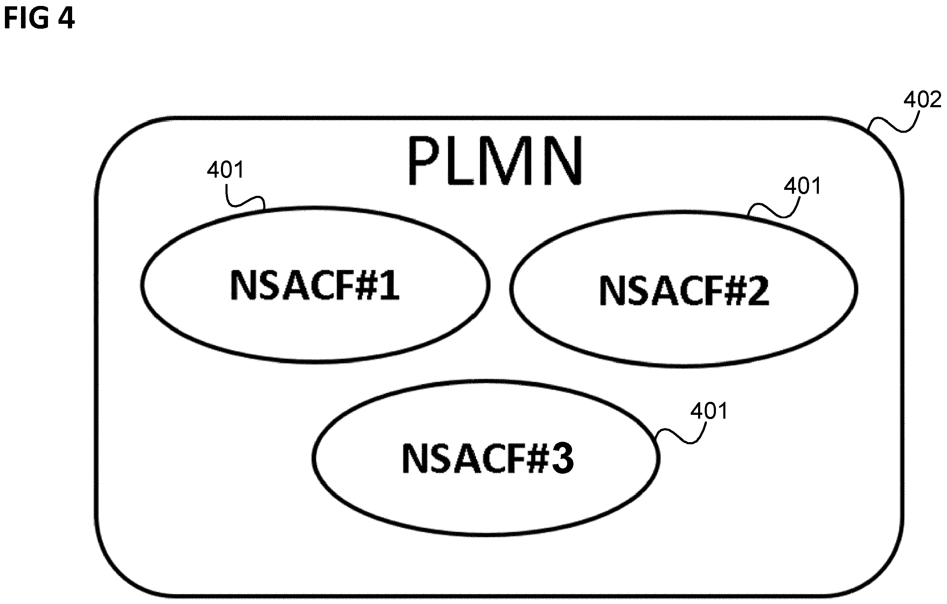

FIG. 4 illustrates a scenario where multiple NSACFs 401 are deployed across a PLMN 402. In that scenario, the NSACFs 401 may serve one or more slices of the PLMN 402, i.e. may serve NFs of different slices of the PLMN 402.

A purpose of having multiple NSACFs in a PLMN may be reliability, e.g. to handle failure of an NSACF and to avoid bottle necks (which a single NSACF for a PLMN may be), and efficiency, since multiple NSACFs can improve the network efficiency and performance (for example by having an NSACF in a north part of a country and an NSACF in a south part of the country).

The following is a list of NSACF deployments options which may be used:
- Multiple NSACFs are deployed in a slice or in a PLMN (as described above with reference to figures 3 and 4).
- Each NSACF serves a specific serving area e.g. given by list of tracking area identities (TAIs)
- NSACFs are deployed specifically for a data network (identified by a data network name DNN). For example, the eMBB core network slice 106 serves the whole PLMN, but there is a DNN which is dedicated to a certain enterprise. In this case, an NSACF may be deployed which serves only the specific DNN of a slice 106.
- Each NSACF serves only a specific region in a country e.g., geographical area information.
- Each NSACF is configured to support one or more respective quota related service operations, e.g.:
   - Number of UE registered service
   - Number of PDU session service
- Different NSACF may have different capabilities for supporting NSAC, e.g.:
   - Support of quota with respect to number of registered UEs
   - Support of quota with respect to number of established PDU Sessions
   - Support of quota with respect to maximum bit rate (MBR) per network slice
   - Support of notification with respect to a quota (e.g. to what degree (or level) it is fulfilled), e.g. to an application function (AF) 120
   - Support of deployment model (e.g., an hierarchal (e.g. as different layers) or tree (e.g. with different branch) models)
      - Model specific capabilities

It should be noted that in FIG. 1 the connections of NSACF 117, NRF 119 and AF 120 are shown to be to the AMF 101. However, all the network functions of the core network 118 may also be directly connected to one another via respective interfaces.

In case that an NSACF or another NF supports certain service operations or has certain capabilities, this may be defined in corresponding attributes of the NF profile of the NF (e.g. NSACF), e.g.
- attribute "nfServices" having the data type array(NSACService), which specifies a list of NF Service Instances, indicating that the NF supports NSAC related service operations like NSAC_#UE_Control and NSAC_#Session_Control;
- attribute "nsacCapability" (only for NSACFs) having the data type array(NSACCapabilities), which specifies a list of NSAC capability supported by the NF like NSAC_#UE_Control, NSAC_#Session_Control.

To allow that a network function performs selection of an NSACF 117 by querying the NRF 119, the NSACF 117 is registered in the NRF 119. Similarly, other network functions related to NSAC (e.g. AMFs, SMFs) may be registered with the NRF 119 such that they may be found by other network functions.

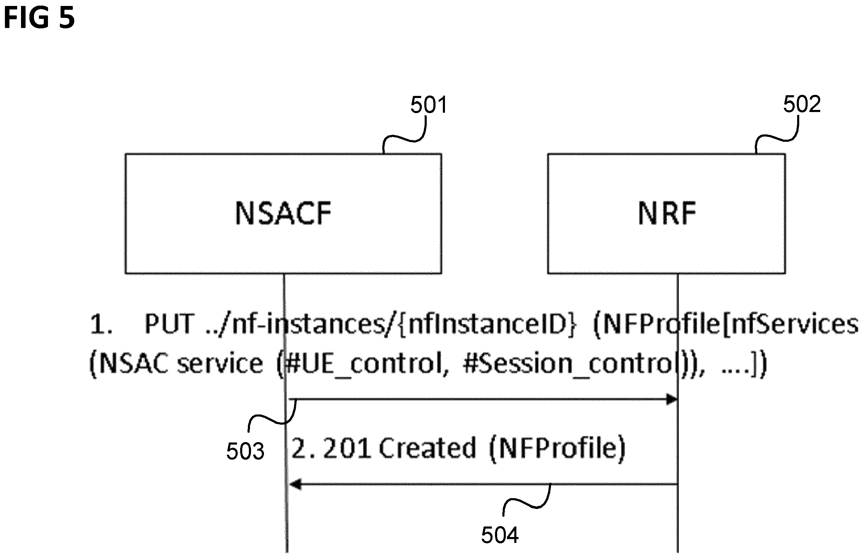

FIG. 5 illustrates a registration of a network function 501 at an NRF 502 by itself.

In 503, the NF 501 sends a PUT message to the NRF 502. In the PUT message, the NF 501 may include information about its NF profile, like the NSAC services it supports, i.e. in general information about the support of NSAC by the NF 501.

In 504, the NRF 502 acknowledges that it has registered the NF (with the corresponding information).

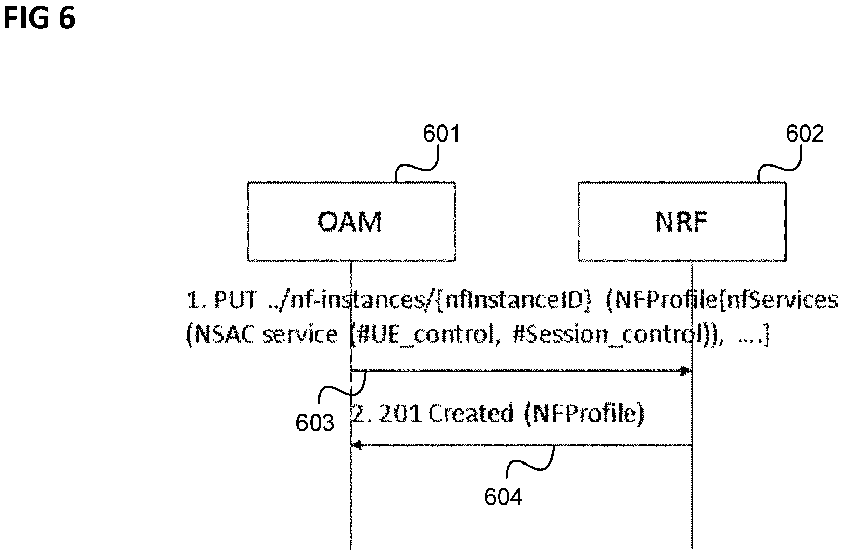

FIG. 6 illustrates a registration of a network function at an NRF 602 by an OAM 601.

In 603, the OAM 601 sends a PUT message to the NRF 602. In the PUT message, the OAM 601 may include information about the NF's profile, like the NSAC services it supports, i.e. in general information about the support of NSAC by the NF.

In 604, the NRF 602 acknowledges that it has registered the NF (with the corresponding information).

When the NF is registered in the NRF 601, 602 another network function (acting as NF service consumer) may query the NRF 601, 602 for NF discovery (or selection).

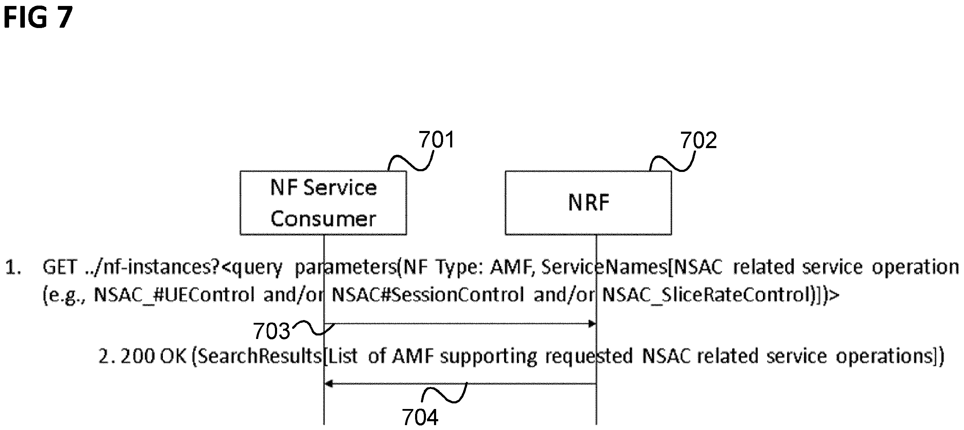

FIG. 7 illustrates an NF discovery or selection by an NF service consumer 701 for NSAC support by querying an NRF 702.

In 703, the NF service consumer 701 sends a GET message to the NRF 702. In the GET message, the NF service consumer 701 (e.g. AMF 101, SMF 110) may indicate information about the support of NSAC that the NF to be discovered or selected should have. For example, the NF service consumer 701 may indicate that the NF to be discovered or selected should support enforcement of a quota with respect to the maximum number of UEs for a network slice, or the maximum number of PDU sessions for a network slice or the maximum data rate for a network slice.

It should be noted that the NF service consumer 701 can also be a NSACF 301, 401 which discoveries another NSACF 301, 401 in a slice 303, 304 or in a PLMN 402. Corresponding parameters may be defined as URI (Uniform Resource Identifier) query parameters (such as "NSAC features" of "nsacCapability". For example, the information element "nsacCapability" indicates the NSAC capability of a target NF (i.e. the NF to be discovered or selected) that it needs to be support. An NSAC capability is for example whether a certain respective quota is supported.

In 704, the NRF returns a list of network functions which have the requested support of NSAC.

The NF service consumer 701 may for example be an AMF like the AMF 201 which needs to discover or select a suitable NSACF 201. However, the AMF 201 may also discover or select another network function like for example an SMF for the case that a PDU session should be established and NSAC should be supported. The NF service consumer 701 indicates the type of the network function to be discovered or selected in the GET message (AMF in the example shown in figure 7).

With regard to the selection of network functions (other than an NSACF) it should be noted that it is not required that all network functions of a certain type (e.g. AMF and SMF) support NSAC (but support may for example be restricted to certain locations). For example, it may be possible that in a slice there are 3GPP Release 15 and 16 network functions as well as 3GPP Release 17 network functions (e.g. AMFs and SMFs). In that case a 3GPP Release 17 network function (e.g. an AMF) may need to discover a peer Release 17 network function (e.g. SMF) which supports quota management.

It should be noted that in case of a selection of network functions which have the requested support of NSAC in another communication network e.g. NF(s) of HPLMN (Home PLMN), the NF service consumer 701 sends a GET message to the NRF 702 for the first communication network (e.g. VPLMN (Visited PLMN)). In the GET message, the NF service consumer 701 (e.g. AMF 101, SMF 110) may indicate information about the support of NSAC that the NF(s) to be discovered or selected should have and PLMN ID (e.g. HPLMN ID or another VPLMN ID) of the NF(s). The NRF 702 of first communication network may communicate with other NRF of second communication network to extract the NF information which support the NSAC. Based on the information provided by the NRF of second communication network, in 704, the NRF returns a list of network functions which have the requested support of NSAC.

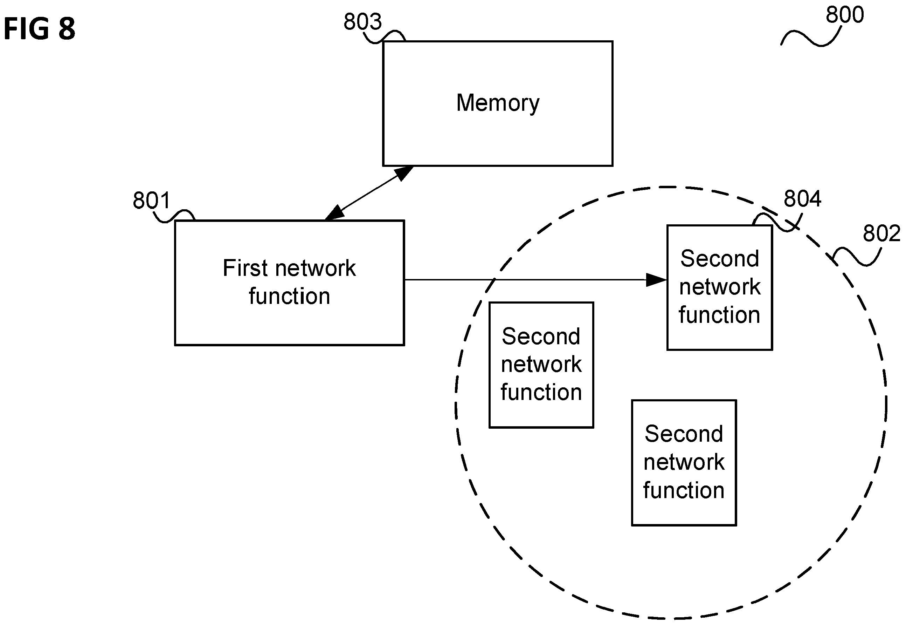

In summary, according to various embodiments, a communication network arrangement is provided as illustrated in FIG. 8.

FIG. 8 shows a communication network arrangement 800 according to an embodiment.

The communication network arrangement 800 includes a first network function 801, a group of second network functions 802 and a memory 803 storing, for each of at least one second network function 804 of the group of second network functions 802, information about support of a network slice quota by the second network function 804.

The first network function 801 is configured to, in response to being requested to perform a service for which it requires one of the second network functions 802 which supports one or more network slice related quota, consult the memory and select one of the second network functions 802 according to the stored information and the requirements of the service.

The first network function 801 is further configured to contact the selected second network function and to perform the requested service by means of the selected second network function.

According to various embodiments, in other words, information is stored and used for the discovery or selection of a network function which fulfils an NSAC requirement. Various embodiments allow NF registration and NF discovery to support NSAC related service operation and NSAC features. This in particular allows using different deployment models of network functions (e.g. NSACFs) and avoids network function (e.g. NSACF/AMF/SMF redirection), which might otherwise be needed if a network function has been contacted which does not support the required NSAC feature or capability.

The information may be stored in the memory for example by an OAM but also by the second network functions themselves. For example, an OAM may first configure an AMF (as example for a second network function) with quota feature support. Then, the AMF registers itself to the NRF (as supporting the quota) such that it may be discovered later by another NF (as example for the first network function, like another AMF, e.g. a source AMF which needs to discover a target AMF during a handover).

It should be noted that there may exist different quota for roaming and non-roaming terminals. For example, there may be quota for
- Maximum number of terminals that can use a specific network slice simultaneously
- Maximum number of non-roaming terminals that can use a specific network slice simultaneously
- Maximum number of roaming terminals that can use a specific network slice simultaneously
- Maximum number of concurrent sessions supported by a specific network slice
- Maximum number of concurrent non-roaming sessions supported by a specific network slice
- Maximum number of concurrent roaming sessions supported by a specific network slice

This allows the operator to differentiate the number of non-roaming UEs and the number of roaming UEs and similarly the number of sessions of non-roaming UEs and roaming UEs.

It should be noted that first network function 801 of a first communication network may also select the second network function 804 of a second communication network using the memory 803 provided information. In addition, it is also possible that each communication network maintains a memory 803. In this case, the memory 803 of first communication network communicate with the memory 803 of the second communication network to extract the second network function 804 information of the second communication network.

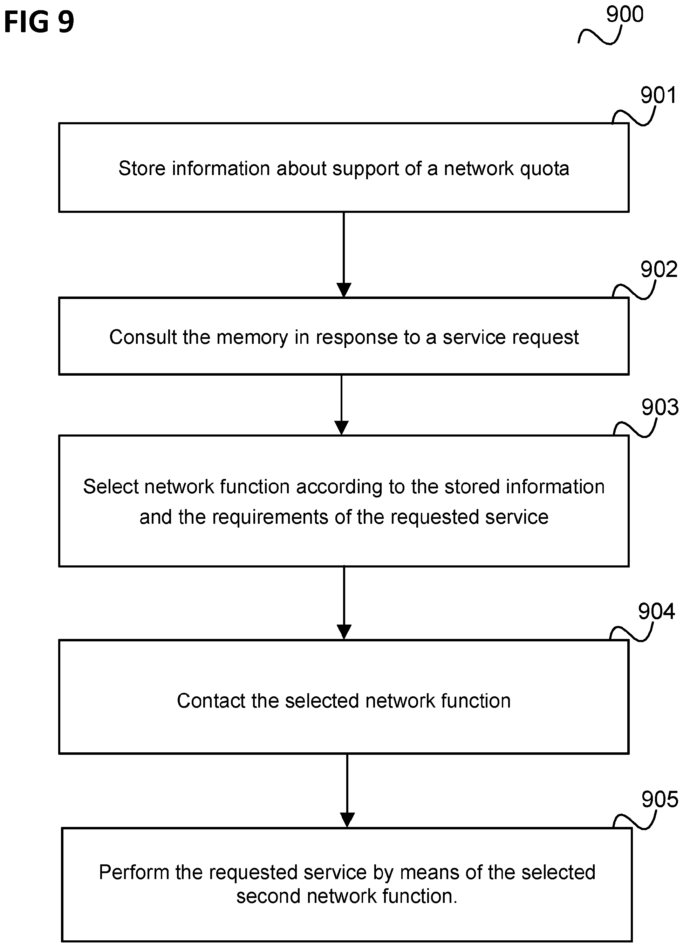

The communication network arrangement for example carries out a method as illustrated in FIG. 9.

FIG. 9 shows a flow diagram 900 illustrating a method for selecting a network function of a communication network.

In 901, for each of at least one network function of a group of network functions, information about support of a network slice quota by the network function is stored in a memory.

In 902, the memory is consulted in response to being requested to perform a service for which it requires one of the second network functions which supports one or more network slice related quota.

In 903, one of the second network functions is selected according to the stored information and the requirements of the service.

In 904, the selected second network function is contacted.

In 905, the requested service is performed by means of the selected second network function.

The components of the communication network arrangement (e.g. the network functions and the memory) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

It should be noted that embodiments and examples described in context of the communication network arrangement are analogously valid for the method.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication network arrangement comprising
A first network function;
A group of second network functions;
A memory storing, for each of at least one second network function of the group of second network functions, information about support of a network slice quota by the second network function;
wherein the first network function is configured to, in response to being requested to perform a service for which it requires one of the second network functions which supports one or more network slice related quota, consult the memory and select one of the second network functions according to the stored information and the requirements of the service; and
to contact the selected second network function and to perform the requested service by means of the selected second network function.

2. The communication network arrangement of claim 1, wherein the communication network arrangement is part of a communication network which comprises multiple network slices and the quota is a quota specific for a network slice and/or a mobile terminal.

3. The communication network arrangement of claim 2, wherein the network slices are core network slices or comprise a core network slice or a combination of both a core network slice and a radio access network slice.

4. The communication network arrangement of any one of claims 1 to 3, wherein the network slice quota limits the total data rate over the communication sessions provided in a network slice for all mobile terminal in the network slice, wherein the network slice quota limits the total data rate over all communication sessions provided in a network slice or wherein the quota limits the number of mobile terminals registered in a network slice and/or the number of communication sessions provided in a network slice.

5. The communication network arrangement of any one of claims 1 to 4, wherein the information is information specifies for the second network function of the group of second network functions at least one of whether the second network function Supports enforcement of a network slice quota which limits the maximum number of mobile terminals registered in a network slice;
Supports enforcement of a network slice quota which limits the maximum number of sessions provided in a network slice;
Supports enforcement of a network slice quota which limits the total data rate over communication sessions provided in a network slice;
Supports notification whether or to what degree a network slice quota which limits the maximum number of mobile terminals registered in a network slice is fulfilled;
Supports notification whether or to what degree a network slice quota which limits the maximum number of sessions provided in a network slice is fulfilled; and
Supports notification whether or to what degree a network slice quota which limits the total data rate over communication sessions provided in a network slice is fulfilled.

6. The communication network arrangement of any one of claims 1 to 5, wherein the memory is a network repository function or the memory is a configuration memory of the first network function.

7. The communication network arrangement of any one of claims 1 to 6, wherein the first network function is an Access and Mobility Management Function or a Session Management Function or a Policy Control function or a Network Slice Selection Function, and the second network function is Access and Mobility Management Function, or an Session Management Function or a Policy Control Function or Network Slice Selection Function, or a network slice admission control function.

8. The communication network arrangement of any one of claims 1 to 7, wherein the first network function is an Application Function and the second network function is a network slice admission control function.

9. The communication network arrangement of any one of claims 1 to 8, wherein the first network function is part of a first communication network and the group of second network functions is part of a second communication network.

10. The communication network arrangement of any one of claims 1 to 9, wherein the communication network arrangement is part of a communication network which comprises the group of second network functions, wherein the group of second network functions comprises multiple second network functions.

11. The communication network arrangement of any one of claims 1 to 10, wherein the communication network comprises multiple network slices and each second network function is associated with a respective network slice and the first network function is configured to select a second network function such that the selected second network function is associated with a network slice for which the service is requested.

12. The communication network arrangement of any one of claims 1 to 11, wherein the service is a registration of a mobile terminal or the establishment of a communication session for the mobile terminal or a policy check of the communication session to be established whether the data rate for the new communication session can be admitted or a notification service about whether or to what degree the quota is fulfilled.

13. The communication network arrangement of any one of claims 1 to 12, wherein the at least one second network function of the group of second network functions is configured to store the information in the memory.

14. The communication network arrangement of any one of claims 1 to 13, comprising an Operation, Administration and Maintenance function, wherein the Operation, Administration and Maintenance function is configured to store the information in the memory.

15. A method for selecting a network function of a communication network comprising storing, for each of at least one network function of a group of network functions, information about support of a network slice quota by the network function in a memory;
Consulting the memory in response to being requested to perform a service for which it requires one of the network functions which supports one or more network slice related quota;
Selecting one of the network functions according to the stored information and the requirements of the service;
Contacting the selected network function; and
Performing the requested service by means of the selected network function.
